# EUROPEAN PATENT APPLICATION

(11) **EP 1 098 382 A2**
(43) Date of publication of application: **09.05.2001**
(21) Application number: 00309727.6
(22) Date of filing: 02.11.2000
(51) Int. Cl.: H01M 10/40, H01M 6/18, H01M 6/22

(54) **Polyelectrolyte gel**

(30) Priority: 05.11.1999 AU PQ389599
(71) Applicant: Ilion Technology Corporation, (NZ)
(72) Inventor: Travas-Sejdic, Jadranka, Auckland (NZ); Streiner, Rudolf, New Lynn, Auckland (NZ); Pickering, Paul Jason, Kingsland, Auckland (NZ); Easteal, Allan James, Epsom, Auckland (NZ)
(74) Representative: Stuttard, Garry Philip

(57) **Abstract**

The present invention comprises a polyelectrolyte gel for use in association with electrochemical devices and systems, as well as a method for forming the polyelectrolyte gel. The polyelectrolyte gel includes a polymer or co-polymer matrix and at least one substantially non-aqueous polar solvent. In a preferred embodiment, the polymer or co-polymer matrix includes at least one monomer having a side chain carrying an alkali metal and at least one monomer having a polar moiety.

## Description

### BACKGROUND

### 1. TECHNICAL FIELD

This invention relates to a gel polyelectrolyte for use in electrochemical applications.

### 2. BACKGROUND ART

Polymeric electrolytes offer the battery industry increased design flexibility as well as improving the safety of lithium based batteries by largely eliminating the need for liquid organic electrolytes. The prospect of "thin film" solid state lithium polymer based batteries has been the driving force behind extensive research.

Key requirements of suitable polymeric electrolytes for lithium based batteries (K.M Abraham, in "Applications of Electroactive Polymers" (B. Scrosati Ed.), Chapman and Hall, London (1993), p75) are:
- conductivity of greater than 10⁻⁴ Scm⁻¹ at temperatures between -40 and 70°C;
- good dimensional and thermal stability in this temperature range;
- electrochemical stability window spanning the potentials between 0.0 and 4.0 V versus the Li/Li⁺ couple;
- chemical compatability with both the anode and cathode over the whole temperature range;
- ability to afford recharge at an efficiency of greater than 99%.

The initial emphasis in research was on solvent-free, typically polyethylene oxide/lithium salt based polymeric electrolytes, but a variety of different polymer architectures have been investigated since. However, it has been argued that the conductivity of dry polymeric electrolytes is inherently limited (P.V. Wright, Electrochim. Acta 43 (10-11), 1137 (1997) and that their use is currently restricted to elevated temperature applications.

Conductivity limitations have been alleviated by the preparation of gel and composite polymeric electrolytes. Gel electrolytes are usually prepared by adding plasticisers and/or liquid electrolytes to the polymer host. Composite electrolytes are formed by adding either active or non-active ceramic material to polymeric electrolytes to improve mechanical stability and ionic conductivity. Gel electrolytes are thus far the most advanced and closest to commercial applications. The best known example is a system based on vinylidene fluoride/hexafluoropropylene copolymers described in United States patent specifications US 5,296,318 and US 5,418,091.

Ionic conductivity of polymeric electrolytes is partially due to transport of anionic species. Cation transference numbers are considerably less than unity, leading to potential concentration gradients when applied in electrochemical systems, adversely affecting electrical performance. It is cation conduction which is of paramount importance in lithium based battery applications. One approach to increase cation transference is to attach the anion to the polymer backbone, forming a polyelectrolyte. One possible example of such materials is an acidic polymer such as poly 2-acrylamido-2-methyl-propane-1-sulphonic acid (PAMPS), which is neutralized by lithium salts. However, polyelectrolytes usually have very low room temperature conductivity, similar in order of magnitude to dry polymeric electrolytes. Every et al. demonstrated that the addition of water can increase the conductivity of the alkali salts of PAMPS by several orders of magnitude as a direct result of increased ion mobility (Every et al., Ionics 2,53 (1996)).

However, the presence of water is extremely undesirable in a lithium based battery as it is readily oxidized/reduced at the high/low potentials used in these systems and is the source of many degradation reactions which limit the life of secondary lithium based batteries.

The application of polyelectrolytes eliminates the need for the addition of lithium salts, such as LiPF₆, LiBF₄, LiAsF₆, LiCIO₄ etc., to the electrolyte as the polymer backbone itself acts as a charge carrier. The advantage is twofold, manufacturing cost is reduced substantially as the commonly used lithium salts are expensive, and chemically aggressive by-products such as hydrofluoric acid are avoided extending the cycle life of the lithium based battery.

It is therefore an object of the present invention to provide an electrolyte for use in electrochemical applications, and particularly alkali metal batteries, which reduces or overcomes the above-mentioned problems, or at least some of them, or which at least provides the public with a useful alternative.

Other objects of the present invention may become apparent from the following description which is given by the way of example only.

### SUMMARY OF THE INVENTION

According to one aspect of the present invention, there is provided a polyelectrolyte gel, including a polymer or co-polymer matrix and at least one substantially non-aqueous polar solvent.

Preferably, the polymer or co-polymer matrix may include at least one monomer having a side chain carrying an alkali metal and at least one monomer having a polar moiety.

Preferably, the at least one monomer having a side chain carrying an alkali metal may have the Formula I, wherein; 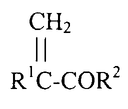 wherein R¹ represents H or CH₃ and R² represents -NH-C(CH₃)₂-CH₂-SO₃-M or -O-M wherein M is an alkali metal.

Preferably, M is lithium.

Preferably, the at least one monomer having a polar moiety may have the Formula II, wherein: 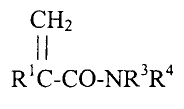 wherein R¹ represents H or CH₃ and each of R³ and R⁴ is selected from H, CH₃, CH₂-CH₃, CH(CH₃)₂, (CH₂)₃CH₃ or C₆H₅.

Preferably, the polymer matrix may further include a cross-linking agent.

Preferably, the cross-linking agent may be represented by the Formula III, wherein: 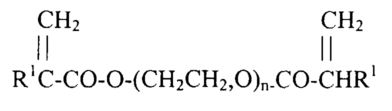 wherein n = 1 and R¹ is H or CH₃.

In an alternative form, the cross linking agent may be represented by the formula IV, wherein:

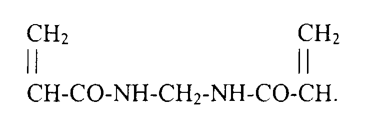

In an alternative preferred form, the at least one monomer having a polar moiety may be represented by the cross-linking agents represented by Formula III or IV.

In one preferred form of the polyelectrolyte gel of the present invention, at least one substantially non-aqueous solvent may be selected to have a similar chemical structure to at least one of the monomers forming the polymer or co-polymer matrix.

Preferably, at least one of the solvents has a high dielectric constant.

Preferably, the solvent or solvents may be selected from amides, mono- and/or di-alkyl substituted amides, and/or organic solvents containing one or more carbonyl and/or sulfonyl functionalities.

According to a further aspect of the present invention there is provided, a composite electrolyte adapted for use in electrochemical applications, including a polyelectrolyte gel as hereinbefore described and a non-conductive web structure or one or more inorganic additives providing additional dimensional stability.

Preferably, the inorganic additives may be selected from SiO₂, Al₂O₃, LiAIO₂, TiO₂, ZrO₂ or zeolites.

According to a further aspect of the present invention, there is provided a secondary lithium battery including a polyelectrolyte gel, or composite electrolyte as hereinbefore described, a positive electrode and a negative electrode.

According to a further aspect of the present invention, there is provided a polyelectrolyte gel as hereinbefore described, when used in an electrochemical application.

According to a further aspect of the present invention, there is provided a polyelectrolyte gel substantially as herein described and with reference to the accompanying examples.

According to a further aspect of the invention, there is provided a method of forming a polyelectrolyte gel including the steps of:
- mixing at least one monomer having a side chain carrying an alkali metal with at least one monomer having a polar moiety,
- dissolving the mixture in at least one substantially non-aqueous polar solvent,
- dewatering to a water content of < 0.1%, and
- inducing polymerization.

In one preferred form, the method may include purging the dissolved mixture with an inert gas.

In a preferred form the method may further include adding a cross-linking agent. Alternatively, at least one monomer having a polar moiety may also have cross-linking properties.

Preferably, the dewatering step may reduce the water content to < 100ppm.

Preferably, the one or more monomer with a side chain carrying an alkali metal may be formed by neutralizing a charged monomer with an alkali metal sulphonate or carbonate.

Preferably, the charged monomer may include a sulphonic acid group.

Preferably, the method may further include adding a non-conductive web and/or one or more inorganic additives prior to polymerization.

Preferably, the substantially non-aqueous solvent may be selected to have a similar chemical structure to at least one of the monomers.

Preferably, at least one of the solvents has a high dielectric constant.

Other aspects of the present invention may become apparent from the following description, which is given by way of example only.

### BRIEF DESCRIPTION OF THE FIGURES

Figure 1:
   Cyclic voltammetry of polyelectrolyte gels prepared according to Examples 4, 8, 9 and 10. Scan rate: 10 mVs⁻¹ Anode: Li; Cathode: AI
Figure 2:
   Discharge profile for lithium button cell test of polyelectrolyte gel prepared according to example 10. Anode: Li; Cathode: LiMn₂0₄
   Idischarge = 15 mAg⁻¹ (cycle 1 to 4)
   Idischarge = 30 mAg⁻¹ (cycle 5 to 18)
   Idischarge = 75 mAg⁻¹ (cycle 19 onwards)
   Experiment temperature: ambient (cycle 1 to 25)
      55°C (cycle 26 onwards)
Figure 3:
   Representations of the formulae of monomers and/or cross-linking agents in preferred forms of the invention.

### DETAILED DESCRIPTION OF THE INVENTION

Investigations were carried out to identify a polyelectrolyte gel having both a high ionic conductivity at ambient temperature and good mechanical stability, which could have commercial significance as an electrolyte/separator in alkali metal based batteries or other electrochemical applications. The following description is generally provided with reference to polyelectrolytes for lithium-based batteries, but it will be appreciated by those skilled in the art that the technology has application for batteries or other electrochemical applications employing other alkali metals, such as sodium or potassium.

The invention provides polyelectrolyte networks, which form gels with substantially non-aqueous polar solvents. The polyelectrolyte network has the negatively charged ions attached to its backbone and alkali metal ions associated with it, thus the gel acts as a single ion conductor.

The gels include polymer or co-polymer chains containing polar moieties, such as amides or alkyl substituted amides, and side chain groups carrying the alkali metal, e.g. lithium sulphonate or lithium carboxylates.

The monomer polar moieties may include electronegative heteroatoms, such as nitrogen or oxygen, facilitate the dissociation of the cation from the polymer backbone, thus decreasing ion pairing and increasing ion mobility. Cation transference numbers should be substantially equal to one.

The polymers or co-polymers may be cross-linked to aid mechanical stability, such that the polyelectrolyte may act as a separator/electrolyte in alkali metal batteries.

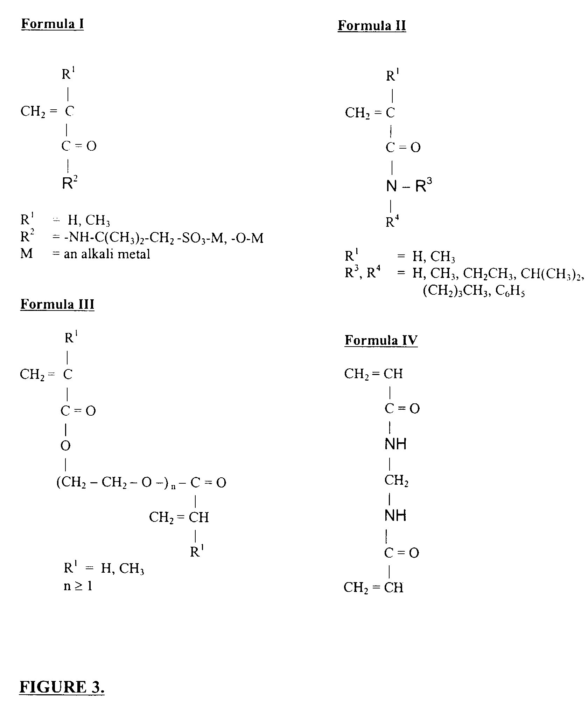

With reference to Figure 3, the polymer matrix is formed either by polymerization of a monomer represented by Formula I and a monomer represented by Formula II, with the inclusion of an optional cross-linking agent, such as is represented by Formulas III and IV, or by polymerization of a monomer represented by Formula II together with a monomer represented by Formulas III or IV.

Preferred monomers are N,N-di-substituted acrylamides as non-charged monomers with a sulphonic acid group as a charge carrier. It will be appreciated by those skilled in the art that different acidic polymers may also be employed as the cation bearing component. It is reasonable to expect that using different starting monomers will result in polymer networks with somewhat different mechanical strength which will influence the ionic conductivity of the polyelectrolyte.

The monomers are preferably selected such that the polyelectrolyte gel is electrochemically stable vs. the Li/Li⁺ couple over a wide potential window (i.e. 0.0 to > 4.0V). Most preferably the polyelectrolyte gel should be stable from 0.0 to 4.5V.

The solvents of choice are non-aqueous solvents particularly those having similar chemical composition as the monomers, (such as amides and mono- and di-alkyl substituted amides), capable of dissociating the cations from the polyelectrolyte backbones. The solvent selected should have a high dielectric constant (>40), or where several solvents are used at least one should have a high dielectric constant. The solvent or solvents selected should be electrochemically stable over the potential range of interest (e.g. ethylene carbonate, dimethyl carbonate, propylene carbonate, dimethyl sulphoxide, etc.). These properties improve the mechanical properties and electrochemical stability of the electrolyte. Furthermore, a solvent monomer system must be selected such that no phase separation occurs during the polymerization reaction.

The polymerization/gelation method used to produce the polyelectrolyte materials of the invention involves conventional free radical polymerization. Typically, a charged monomer (Lisalt), a non-charged monomer and a cross-linking monomer are mixed together, dissolved in appropriate solvent, or mixture of solvents. After complete dissolution the pre-gel solution is purged with inert gas, preferentially argon, to remove oxygen to avoid termination of the polymerization reaction and kept over a molecular sieve to remove traces of water. Subsequently an appropriate initiator, usually from the group of persulphates and azo-compounds is added to the water-free pre gel solution. Depending on the initiator the polymerization is induced thermally, photochemically, with redox reaction or with other irradiation sources. Typically glass moulds and PTFE moulds can be used to control the gel thickness using a spacer of appropriate thickness. However, the gel can be polymerized in any shape.

A non-conductive web (such as a non-woven glass fiber or polymer material, e.g. polyethylene or polypropylene or similar electrically insulating materials) can be placed in the mould prior to gelation, to give better mechanical performance of the polyelectrolyte gel and easier handling. Similar effects can be achieved by adding inorganic additives, such as silica, alumina, zeolites etc., to the pre gel solution. Such composite electrolytes can have improved conductivity, mechanical properties and electrochemical stability. It will be appreciated by those skilled in the art that gel films can also be prepared by casting, coating and printing techniques.

The present invention is further illustrated through the following examples, which are not intended to be limitations of the invention.

### Examples:

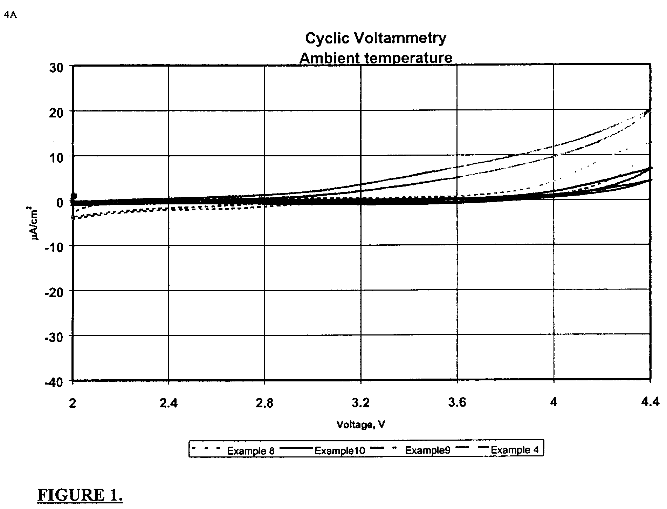

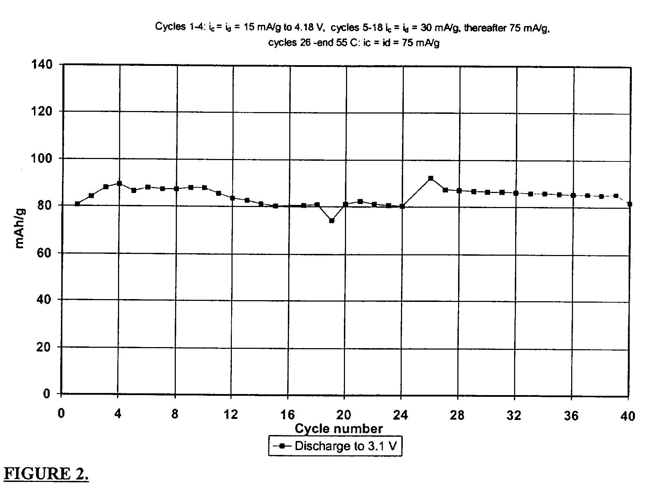

The following examples provide details about the synthesis of the polyelectrolyte gels. Chemical compositions and ionic conductivities, as determined by AC impedance spectrometry are summarized in table I. Electrochemical stability of the polyelectrolyte gels has been evaluated by cyclic voltammetry at a scan rate of 10 mVs⁻¹ (Figure 1). If N,N'-dimethylformamide was used as the solvent the cyclic voltammograms indicate the onset of an oxidation reaction at ca. 3.0 V, whereas gels prepared with N,N'-dimethylacetamide and mixtures of N,N'-dimethylacetamide and ethylene carbonate are stable up to a potential of ca. 4.0 V vs. lithium. The gel prepared according to Example 10 has been evaluated by charge/discharge cycling (between 3.1 and 4.18 V) using automated battery testing equipment in standard 2032 lithium button cells. Doped lithium manganese oxide of spinel structure (LiMn₂0₄) has been used as the cathode active material. The discharge profile is depicted in Figure 2. The discharge current was 15 mAg⁻¹ up to cycle 4, 30 mAg⁻¹ cycle 5 to 18 and 75 mAg⁻¹ thereafter. These currents correspond to ca. at C/7, C/3.5 and C/1.4 rate, respectively. Cycles 1 to 25 were performed at ambient temperature and cycles 26 and thereafter at 55°C. The electrochemical results clearly demonstrate the usefulness of the polyelectrolyte gels in lithium based battery systems.

### Example 1:

0.6632 g of acrylamido-2-methyl-1-propane sulphonic acid was dissolved in formamide and neutralized with 0.1182 g of Li₂Co₃. After reaction completion 1.9760 g of acrylamide and 0.1542 g of methylenebisacrylamide was added to the solution. The solution was transferred to a 20 ml volumetric flask and filled up with formamide. This solution was purged with oxygen-free argon and kept over 4A molecular sieves for two days with occasional shaking. After that 0.1 ml of 1 M solution of potassium persulphate in formamide was added to the solution. The solution was filtered through a 0.45 µm filter and filled into a PTFE mould. The polymerization reaction was conducted at 70°C.

### Example 2:

A gel was produced by the same method as that of Example 1 except 0.1773 g of methylenebisacrylamide was used instead of 0.1542 g and the monomer solution was kept over molecular sieves for 9 days.

### Example 3:

A N,N'-dimethylacrylamide-based gel was prepared by polymerizing 2.86 ml of N,N'-dimethylacrylamide with 1.6580 g of AMPS neutralized with appropriate amount of Li₂CO₃, and 0.67 ml of tetraethyleneglycoldiacrylate. N,N'-dimethylformamide was used as a solvent. The solution was purged with oxygen-free argon and kept over 4A molecular sieves for several days with occasional shaking. Polymerization reaction, performed between two glass plates covered with PTFE sheets was initiated with 20 mg of azobis (cyclohexanecarbonitrile) at 90°C.

### Example 4:

A gel was produced in the same way as in Example 3 except that a PET web was placed in the mould and the gel polymerized on top of it.

### Example 5:

A gel was produced in the same way as in Example 3 except that a mixture of N,N'-dimethylformamide/ethylene carbonate in volume ratio of 4:1 was used as a solvent instead of N,N'-dimethylformamide. A part of the gel film was synthesized over the PET web.

### Example 6:

A gel was produced in the same way as in Example 5 except that a mixture of N,N'-dimethylformamide/ethylene carbonate in volume ratio of 2:1 was used as a solvent instead of the ratio of 4:1, and the gel was synthesized on the PET web.

### Example 7:

A gel was prepared by polymerizing 3.15ml of N,N'-dimethylacrylamide with 1.3679 g of AMPS neutralized with an appropriate amount of Li₂CO₃, and 1.20ml of tetraethyleneglycoldiacrylate. N,N'-dimethylacetamide was used as a solvent. The solution was purged with oxygen-free argon and kept over 4A molecular sieves for several days with occasional shaking. Polymerization reaction, performed between two glass plates covered with PTFE sheets was initiated with 30 mg of azobis (cyclohexanecarbonitrile) at 90°C. A part of gel film was synthesized over the PET web.

### Example 8:

A gel was prepared by polymerizing 3.30 ml of N,N'-dimethylacrylamide with 1.2435 g of AMPS neutralized with appropriate amount of Li₂CO₃, and 0.60 ml of tetraethyleneglycoldiacrylate. N,N'-dimethylacetamide was used as a solvent. The solution was purged with oxygen-free argon and kept over 4A molecular sieves for several days with occasional shaking. Polymerization reaction, performed between two glass plates covered with PTFE sheets was initiated with 20 mg of azobis (cyclohexanecarbonitrile) at 90oC. A part of gel film was synthesized over the PET web.

### Example 9:

A gel was produced in the same way as in Example 8 except that a mixture of N,N'-dimethylacetamide /ethylene carbonate in volume ratio of 2:1 was used as a solvent instead of N,N'-dimethylacetamide.

### Example 10:

A gel was produced in the same way as in Example 9 except that 10% (w/v) of fumed silica was mixed into the pre-gel solution. A secondary lithium polymer battery was constructed using the polyelectrolyte prepared according to this example. The "button" cell was assembled as follows: can, cathode, gel, lithium disk, steel disk, spring load and lid. Doped LiMn₂O₄ on an aluminum foil was used as a positive electrode and Li metal as a negative electrode. The size of cathode and anode was 14 mm and of the gel 15.5 mm. The gel thickness was approximately 200 µm. The cell was crimp-closed.

Figure 2 shows an example of the discharge profile for such a button cell. Discharge current was 15 mAg⁻¹ for the first four cycles, 30 mAg⁻¹ for cycle 15 to 18 and 75 mAg⁻¹ thereafter. Cycles 1 to 25 were performed at ambient temperature and cycles 26 and thereafter at 55°C.

The polyelectrolyte gels of the invention, thus, provide a non-aqueous electrolyte of high conductivity and good mechanical stability suitable for use in electrochemical applications specifically requiring electrochemical stability over a wide potential range, such as alkali metal (and particularly lithium) batteries, electrochromic windows, actuators and the like.

### Example 11:

A gel was prepared by polymerizing 7.932 ml of N,N'-dimethylacrylamide with 4.1450 g of AMPS neutralized with appropriate amount of Li₂CO₃, and 0.817 ml of tetraethyleneglycoldiacrylate. 100 ml of N,N'-dimethylacetamide/ ethylene carbonate in volume ratio of 2:1 was used as a solvent. The solution was purged with oxygen-free argon and kept over 4A molecular sieves for several days with occasional shaking. The pre-gel solution contained 5% (w/v) of fumed silica. Polymerization reaction, performed between two glass plates was initiated with 1 mg of azobis (cyclohexanecarbonitrile) per 1 ml of the pre-gel solution at 90°C.

### Example 12:

A gel was prepared by polymerizing 6.418 ml of methyl methacrylate with 2.3316 g of AMPS neutralized with appropriate amount of Li₂CO₃, and 1.021 ml of tetraethyleneglycoldiacrylate. 2-methoxyethyl ether/ ethylene carbonate in volume ratio of 1:1 was used as a solvent. The solution was purged with oxygen-free argon and kept over 4A molecular sieves for several days with occasional shaking. Polymerization reaction, performed between two glass plates was initiated with 1 mg of azobis (cyclohexanecarbonitrile) per 1 ml of the pre-gel solution at 92°C.

### Example 13:

A gel was prepared by polymerizing 3.298 ml of N,N'-dimethylacrylamide with 0.4679 g of lithium acrylate and 0.411 ml of tetraethyleneglycoldiacrylate. 20 ml of N,N'-dimethylacetamide/ ethylene carbonate in volume ratio of 3.2 : 1 was used as a solvent. The solution was purged with oxygen-free argon and kept over 4A molecular sieves for several days with occasional shaking. The pre-gel solution contained 7 % (w/v) of fumed silica. Polymerization reaction, performed between two glass plates was initiated with 1 mg of azobis (cyclohexanecarbonitrile) per 1 ml of the pre-gel solution at 90°C.

Where in the foregoing description, reference has been made to specific components or integers of the invention having known equivalents then such equivalents are herein incorporated as if individually set forth.

Although this invention has been described by way of example and with reference to possible embodiments thereof, it is to be understood that modifications or improvements may be made thereto without departing from the scope or spirit of the invention.

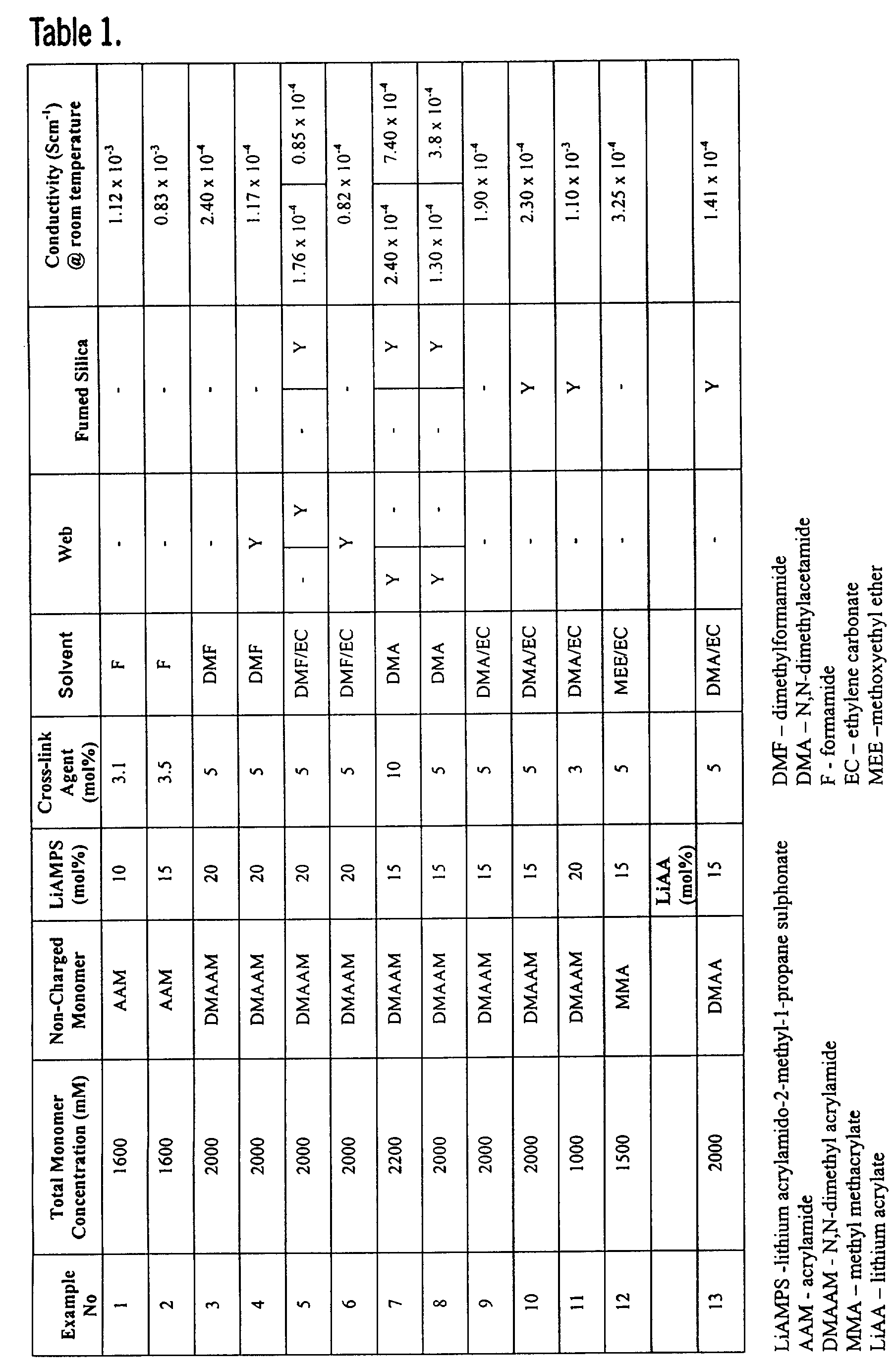

## Claims

1. A polyelectrolyte gel for use in an electrochemical device comprising:
- a polymer or co-polymer matrix and at least one substantially non-aqueous polar solvent.

2. The device according to Claim 1, wherein the polymer or co-polymer matrix includes at least one monomer having a side chain carrying an alkali metal and at least one monomer having a polar moiety.

3. The device according to Claim 2, wherein the at least one monomer having a side chain carrying an alkali metal has the Formula I, wherein: 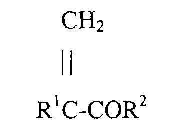 wherein R¹ represents H or CH₃ and R² represents -NH-C(CH₃)₂-CH₂-SO₃-M or -0-M wherein M is an alkali metal.

4. The device according to Claim 3, wherein M is selected from the group consisting of lithium, sodium and potassium.

5. The device according to Claim 2, wherein the at least one monomer having a polar moiety has the Formula II, wherein: 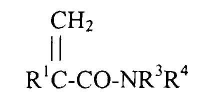 wherein R¹ represents H or CH₃ and each of R³ and R⁴ is selected from H, CH₃, CH₂-CH₃, CH(CH₃)₂, (CH₂)₃CH₃ or C ₆H₅.

6. The device according to Claim 1, wherein the polymer matrix includes a cross-linking agent.

7. The device according to Claim 6, wherein the cross-linking agent is represented by the Formula III, wherein: 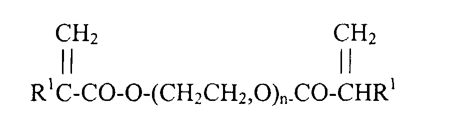 wherein n ≥ 1 and R¹ is H or CH₃.

8. The device according to Claim 6, wherein the cross linking agent is represented by the Formula IV, wherein:

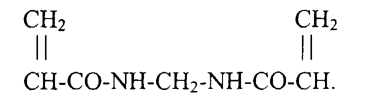

9. The device according to Claim 7, wherein the at least one monomer having a polar moiety is represented by the cross-linking agent represented by Formula III.

10. The device according to Claim 8 wherein the at least one monomer having a polar moiety is represented by the cross-linking agent represented by Formula IV.

11. The device according to Claim 2, wherein at least one of the substantially non-aqueous solvents has a similar chemical structure to at least one of the monomers forming the polymer or co-polymer matrix.

12. The device according to Claim 1, wherein at least one of the substantially non-aqueous solvents has a high dielectric constant.

13. The device according to Claim 1, wherein at least one of the substantially non-aqueous solvents are selected from the group consisting of amides, mono- and/or di-alkyl substituted amides, and or organic solvents containing one or more carbonyl and/or sulfonyl functionalities.

14. A composite electrolyte adapted for use in electrochemical applications, comprising:
- a polyelectrolyte gel according to Claim 1; and
- means for providing dimensional stability.

15. The electrolyte according to Claim 14, wherein the dimensional stability means comprises a non-conductive web structure.

16. The electrolyte according to Claim 14, wherein the dimensional stability means comprises one or more inorganic additives.

17. The electrolyte according to Claim 16, wherein the one or more inorganic additives are selected from the group consisting of SiO₂, Al₂O₃, LiAIO₂, TiO₂, ZrO₂ or zeolites.

18. The device according to Claim 14, wherein the electrochemical application comprises a secondary lithium battery having a positive electrode and a negative electrode.

19. The device according to Claim 1, wherein the electrochemical device comprises a secondary lithium battery having a positive electrode and a negative electrode.

20. A method of forming a polyelectrolyte gel comprising the steps of:
- mixing at least one monomer having a side chain carrying an alkali metal with at least one monomer having a polar moiety;
- dissolving the mixture in at least one substantially non-aqueous polar solvent;
- dewatering to a water content of < 0.1 %; and
- inducing polymerization.

21. The invention according to Claim 20, wherein the method further includes the step of purging the dissolved mixture with an inert gas.

22. The invention according to Claim 20, wherein the method further includes the step of adding a cross-linking agent.

23. The method according to Claim 22, wherein the step of adding a cross-linking agent comprises the step of adding the cross-linking agent to at least one of the monomers having a polar moiety.

24. The method according to Claim 20, wherein the step of dewatering comprises the step of reducing the water content to < 100ppm.

25. The invention according to Claim 20, wherein the method further includes the step of forming the at least one monomer with a side chain carrying an alkali metal, wherein the step of forming comprises:
- neutralizing a charged monomer with at least one of an alkali metal sulphonate or carbonate.

26. The method according to Claim 25, wherein the charged monomer includes a sulphonic acid group or carboxylic acid group.

27. The invention according to Claim 20, wherein the method further includes the step of adding at least one of a non-conductive web or one or more inorganic additives prior to the step of inducing polymerization.
